# FASCICULE DE BREVET EUROPEEN

(11) **EP 4 263 262 B1**
(45) Date de publication et mention de la délivrance du brevet: **05.02.2025**
(21) Numéro de dépôt: 21823561.2
(22) Date de dépôt: 03.12.2021
(51) Int. Cl.: B60K 35/10, B60K 35/00, B60W 50/14, B60W 50/16, B60W 60/00, B62D 1/04, B60K 35/28, B60K 35/29, B60K 35/60, B62D 15/02

(54) **SYSTÈME DE COMMANDE, ET VÉHICULE AUTOMOBILE ASSOCIÉ**
STEUERSYSTEM UND ENTSPRECHENDES KRAFTFAHRZEUG
CONTROL SYSTEM AND ASSOCIATED MOTOR VEHICLE

(30) Priorité: 17.12.2020 FR 2013412
(43) Date de publication de la demande: 25.10.2023
(73) Titulaire: Renault SAS, 92100 Boulogne Billancourt (FR); Valeo Comfort and Driving Assistance, 94000 Créteil (FR)
(72) Inventeur: LANGLOIS, Sabine, 75015 Paris (FR); JOANNIDES, Alexandre, 94000 Créteil (FR); TISSOT, Jean-Marc, 94000 Créteil (FR)
(74) Mandataire: Innovincia
(86) Numéro de dépôt international: PCT/EP2021/084130
(87) Numéro de publication internationale: WO 2022/128528

(56) Documents cités:
- DE-A1- 102017 208 504
- FR-A1- 3 045 546
- US-A1- 2019 135 305
- US-A1- 2020 262 340

## Description

La présente invention relève du domaine des véhicules automobiles dits semi-autonomes ou autonomes. L'invention concerne un système de commande permettant de piloter manuellement le véhicule automobile ou de manière automatisée ou semi-automatisée. L'invention concerne également un véhicule automobile équipé d'un tel système de commande.

Traditionnellement, les véhicules automobiles sont conduits selon un mode manuel, par un utilisateur qui doit assurer l'ensemble des opérations de contrôle de son véhicule et de vérification de son environnement.

Il est connu d'équiper les véhicules automobiles avec des systèmes de commande comprenant des dispositifs d'aide à la conduite et des modules de pilotage automatisés permettant de commander le véhicule pour réaliser une ou plusieurs manoeuvres de manière automatisée ou semi-automatisée, c'est-à-dire sans intervention du conducteur, ou avec une intervention réduite de ce dernier. On peut citer par exemple les régulateurs de vitesse et systèmes de contrôle de distance, permettant au conducteur de se décharger d'une partie de son activité de conduite, ou encore de systèmes d'aide au stationnement qui aident le conducteur à garer le véhicule.

De tels systèmes sont actuellement largement répandus sur le marché, et leurs fonctionnalités sont progressivement associées les unes aux autres pour rendre les véhicules automobiles de plus en plus automatisés. Toutes ces fonctionnalités poursuivent globalement l'objectif commun d'offrir au conducteur du véhicule automobile la possibilité d'avoir une autre activité que la conduite du véhicule, de se détendre, pendant ses déplacements, par exemple en utilisant divers systèmes multimédias, ou d'infodivertissement, ou de pratiquer un autre loisir comme la lecture.

Le conducteur peut ainsi bénéficier d'une délégation de conduite sur toute ou partie de la durée de son parcours.

Selon une échelle proposée par l'organisation internationale « SAE International », anciennement Society of Automotive Engineers, plusieurs niveaux d'automatisation de conduite d'un véhicule sont envisagés. Le niveau « un » offre une assistance automatisée pour un contrôle longitudinal ou un contrôle latéral/transversal, pour le suivi des lignes blanches, sous la supervision du conducteur. Le niveau « deux » offre une assistance automatisée à la fois pour le contrôle longitudinal et le contrôle latéral du véhicule automobile V, et le conducteur supervise. À partir du troisième niveau, il s'agit d'un mode semi-automatisé ou automatisé. Le niveau « trois » offre une automatisation dans certaines conditions prédéfinies, par exemple sur autoroute, et le niveau « quatre » offre une automatisation plus élevée, sans assistance de la part du conducteur dans des cas autorisés. Le conducteur est alors libéré de la tâche de supervision de la conduite, notamment surveiller la survenue de dangers, les panneaux routiers, et autres. Il peut poser ses pieds où il le souhaite, lâcher le volant, détourner le regard de la route pour se reposer, lire ou autre. Le niveau « cinq » correspond à un niveau d'automatisation élevée sans assistance de la part du conducteur.

Les véhicules automobiles actuellement sur le marché proposent des systèmes d'automatisation partielle de la conduite. En fonction de la réglementation des pays, les modules de pilotage automatisés pourront prendre de plus en plus de responsabilité dans la conduite, notamment selon les troisième et quatrième niveaux, de l'échelle précédemment citée, correspondant à un rôle de plus en plus prégnant de l'assistance automatisée.

Toutefois, le conducteur risque de ne pas toujours clairement identifier l'état de conduite, c'est-à-dire si un niveau d'automatisation de conduite est actif ou non, ou si le conducteur doit superviser la conduite. Il est important de pouvoir signaler au conducteur à tout moment qui a la responsabilité de la conduite entre le conducteur ou le module de pilotage automatisé, en évitant que le conducteur n'ait à détourner le regard de la scène de route.

De plus, lorsqu'un transfert de responsabilité de conduite est prescrit, c'est-à-dire que le pilotage passe d'un contrôle manuel à un contrôle automatisé ou inversement, la transition en cours n'est pas matérialisée, de sorte que le conducteur peut penser à tort que le transfert de responsabilité de conduite est ou non finalisé.

Par ailleurs, dans un mode semi-automatisé ou automatisé, il convient également d'alerter le conducteur de façon claire lorsque des conditions limites de fonctionnement sont détectées risquant le désengagement du module de pilotage automatisé.

Un système de commande pour un véhicule automobile de l'état de la technique est connu du document US 2020/262340 A1.

L'invention a pour objectif de pallier au moins partiellement un ou plusieurs des inconvénients de l'art antérieur en proposant un système de commande permettant de signaler au conducteur, de façon centralisée et sans ambiguïté, les informations liées à l'automatisation de conduite. L'invention a pour objectif de permettre au conducteur de savoir lorsqu'un niveau d'automatisation de conduite est actif ou peut être activé. L'invention a aussi pour objectif d'alerter le conducteur de façon fiable lorsqu'il doit reprendre le contrôle du pilotage. L'invention a encore pour objectif de signaler de façon claire lorsqu'une transition de responsabilité de conduite entre le conducteur et le module de pilotage automatisé est en cours et lorsque le transfert de responsabilité de conduite est effectif.

À cet effet l'invention a pour objet un système de commande d'un véhicule automobile configuré pour être piloté selon un mode manuel par un conducteur sans assistance automatisée ou selon différents niveaux d'automatisation de conduite au moyen d'un module de pilotage automatisé du système de commande. Le système de commande comporte un dispositif d'aide à la conduite configuré pour analyser une configuration routière du véhicule automobile de façon à déterminer si un niveau d'automatisation de conduite est disponible et pour détecter un niveau d'automatisation de conduite actif. Le système de commande comporte également un organe de contrôle de direction du véhicule automobile.

Selon l'invention, l'organe de contrôle de direction comporte au moins un indicateur lumineux. Le dispositif d'aide à la conduite est configuré pour modifier l'état dudit au moins un indicateur lumineux :
a. lorsque le dispositif d'aide à la conduite détermine un niveau d'automatisation de conduite disponible, de façon à signaler le niveau d'automatisation de conduite disponible déterminé, et
b. lorsque le dispositif d'aide à la conduite détecte un niveau d'automatisation de conduite actif, de façon à signaler le niveau d'automatisation de conduite actif détecté, et
c. lorsque le dispositif d'aide à la conduite détermine en fonction de la configuration routière que le véhicule automobile doit être piloté par le conducteur, de façon à signaler au moins une requête de pilotage manuel du véhicule automobile, et
d. lorsque le dispositif d'aide à la conduite détecte une commutation entre un niveau d'automatisation de conduite et le mode manuel, de façon à signaler une transition de responsabilité de conduite entre le module de pilotage automatisé et le conducteur.

Toutes les informations indiquant le responsable de la conduite, entre le conducteur humain et le module de pilotage automatisé, mais également un transfert de responsabilité de la conduite en cours (c'est-à-dire pendant la transition), ainsi que lorsque le conducteur humain doit reprendre en mains le véhicule automobile, sont signalisées sur le même organe de contrôle de direction sans nécessairement faire appel à d'autres éléments par exemple du poste de conduite dans le véhicule automobile.

Le système de commande peut en outre comporter une ou plusieurs caractéristiques suivantes décrites ci-après, prises séparément ou en combinaison.

L'organe de contrôle de direction peut comporter au moins un premier indicateur lumineux configuré pour signaler le niveau d'automatisation de conduite disponible ou actif, un deuxième indicateur lumineux configuré pour signaler ladite au moins une requête de pilotage manuel, et un troisième indicateur lumineux pour signaler la transition de responsabilité de conduite.

Le dispositif d'aide à la conduite est configuré pour modifier l'état d'au moins un des indicateurs lumineux.

Notamment, le dispositif d'aide à la conduite est configuré pour modifier l'état dudit au moins un premier indicateur lumineux, lorsque le dispositif d'aide à la conduite détermine un niveau d'automatisation de conduite disponible, de façon à signaler le niveau d'automatisation de conduite disponible déterminé.

Le dispositif d'aide à la conduite est configuré pour modifier l'état dudit au moins un premier indicateur lumineux, lorsque le dispositif d'aide à la conduite détecte un niveau d'automatisation de conduite actif, de façon à signaler le niveau d'automatisation de conduite actif détecté.

Le dispositif d'aide à la conduite est configuré pour modifier l'état dudit au moins un deuxième indicateur lumineux, lorsque le dispositif d'aide à la conduite détermine en fonction de la configuration routière que le véhicule automobile doit être piloté par le conducteur, de façon à signaler au moins une requête de pilotage manuel du véhicule automobile.

Le dispositif d'aide à la conduite est configuré pour modifier l'état dudit au moins un troisième indicateur lumineux, lorsque le dispositif d'aide à la conduite détecte une commutation entre un niveau d'automatisation de conduite et le mode manuel, de façon à signaler une transition de responsabilité de conduite entre le module de pilotage automatisé et le conducteur.

En particulier, l'organe de contrôle de direction peut comporter au moins une première région munie du premier indicateur lumineux, une deuxième région munie du deuxième indicateur lumineux, et une troisième région munie du troisième indicateur lumineux. Ceci permet une signalisation claire et distincte pour chaque information à transmettre au conducteur. L'utilisation du système de commande est ainsi plus intuitive pour le conducteur.

L'organe de contrôle de direction est par exemple un volant de direction. Le volant de direction peut comporter un moyeu muni dudit au moins un premier indicateur lumineux, une couronne périphérique munie dudit au moins un deuxième indicateur lumineux, et au moins une branche reliant le moyeu à la couronne périphérique, et munie dudit au moins un troisième indicateur lumineux. Les informations signalées sur le volant de direction sont facilement visibles par le conducteur.

Ledit au moins un indicateur lumineux ou au moins un des indicateurs lumineux peut comporter une série de diodes électroluminescentes formant un bandeau lumineux.

Ledit au moins un indicateur lumineux ou au moins un des indicateurs lumineux peut comporter au moins une source lumineuse configurée pour émettre différentes couleurs de lumière. Le dispositif d'aide à la conduite est configuré pour piloter un éclairage dudit au moins un indicateur lumineux selon un code couleur prédéfini.

Ledit au moins un indicateur lumineux ou au moins un des indicateurs lumineux peut comporter au moins une source lumineuse d'intensité variable. Selon un mode de réalisation, le dispositif d'aide à la conduite est configuré pour piloter l'éclairage dudit au moins un indicateur lumineux, par exemple dudit au moins un premier indicateur lumineux, avec une première intensité lumineuse lorsqu'un niveau d'automatisation est disponible et avec une deuxième intensité différente de la première intensité lorsqu'un niveau d'automatisation est actif. Selon un autre mode de réalisation, le dispositif d'aide à la conduite est configuré pour piloter l'éclairage dudit au moins un indicateur lumineux avec une intensité lumineuse évolutive, par exemple dudit au moins un troisième indicateur lumineux au cours d'une transition de responsabilité de conduite.

Le dispositif d'aide à la conduite est avantageusement configuré pour piloter l'éclairage d'au moins un indicateur lumineux selon au moins une séquence d'animation lumineuse.

Selon un aspect particulier, le dispositif d'aide à la conduite est configuré pour piloter l'éclairage d'au moins deux indicateurs lumineux selon des séquences d'animation lumineuse différentes. Le dispositif d'aide à la conduite peut être configuré pour piloter un éclairage dudit au moins un premier indicateur lumineux selon une séquence d'animation lumineuse, lorsqu'un niveau d'automatisation de conduite est disponible. Le dispositif d'aide à la conduite peut être configuré pour piloter un éclairage dudit au moins un deuxième indicateur lumineux selon une autre séquence d'animation lumineuse, lorsque le dispositif d'aide à la conduite détermine que le véhicule automobile doit être piloté par le conducteur.

Le dispositif d'aide à la conduite est avantageusement configuré pour piloter un éclairage par clignotement dudit au moins un indicateur lumineux à différentes fréquences.

Selon un exemple de réalisation particulier, le dispositif d'aide à la conduite peut être configuré pour piloter un éclairage par clignotement dudit au moins un premier indicateur lumineux à une première fréquence, lorsqu'un niveau d'automatisation de conduite est disponible.

Le dispositif d'aide à la conduite peut être configuré pour piloter un éclairage par clignotement dudit au moins un deuxième indicateur lumineux à une deuxième fréquence, lorsque le dispositif d'aide à la conduite détermine que le véhicule automobile doit être piloté par le conducteur. La deuxième fréquence peut être supérieure à la première fréquence.

Le dispositif d'aide à la conduite peut être configuré pour piloter un éclairage statique dudit au moins un indicateur lumineux.

De façon avantageuse, le dispositif d'aide à la conduite est configuré pour piloter au moins une séquence d'animation lumineuse dudit au moins un indicateur lumineux ou d'au moins un des indicateurs lumineux, représentant la transition de responsabilité de conduite. Le dispositif d'aide à la conduite peut être configuré pour piloter une première séquence d'animation lumineuse. Ledit au moins un indicateur lumineux peut former un chemin lumineux selon un premier sens, associé à une transition de responsabilité de conduite du conducteur vers le module de pilotage automatisé. Le dispositif d'aide à la conduite peut être configuré pour piloter une deuxième séquence d'animation lumineuse. Ledit au moins un indicateur lumineux peut former un chemin lumineux selon un deuxième sens, associé à une transition de responsabilité de conduite du module de pilotage automatisé vers le conducteur. Ledit chemin lumineux peut présenter au moins en partie au moins l'une des formes suivantes : linéaire, circulaire.

Selon un mode de réalisation, le dispositif d'aide à la conduite est configuré pour piloter une séquence d'animation lumineuse dudit au moins un indicateur lumineux avec une intensité lumineuse évolutive durant la transition de responsabilité de conduite, jusqu'à atteindre une intensité lumineuse prédéfinie lorsque la transition de responsabilité de conduite est terminée. L'intensité lumineuse peut être progressive ou régressive durant la transition de responsabilité de conduite.

De façon avantageuse, le système de commande comporte au moins un organe de commande pour sélectionner un niveau d'automatisation de conduite. Il s'agit de préférence d'un organe de commande au volant.

Selon un aspect, le dispositif d'aide à la conduite peut être configuré pour générer au moins un avertissement en complément du changement d'état de l'indicateur lumineux, tel qu'un avertissement visuel et/ou un avertissement sonore et/ou un avertissement par retour haptique. Le système de commande peut comporter un dispositif d'avertissement sonore et/ou par retour haptique et/ou un dispositif d'affichage. Le dispositif d'affichage peut être choisi parmi un affichage tête haute, un affichage sur le tableau de bord, un affichage sur la planche de bord.

L'invention concerne encore un véhicule automobile configuré pour être piloté selon un mode manuel par un conducteur sans assistance automatisée ou selon différents niveaux d'automatisation de conduite, et comportant un système de commande tel que défini ci-dessus.

D'autres avantages et caractéristiques de l'invention apparaîtront plus clairement à la lecture de la description suivante donnée à titre d'exemple illustratif et non limitatif, et des dessins annexés parmi lesquels :
[Fig. 1] La figure 1 représente de façon très schématique l'interaction entre divers éléments d'un système de commande selon l'invention équipant un véhicule automobile.
[Fig. 2a] La figure 2a montre un volant de direction du véhicule automobile avec un premier indicateur lumineux dans un état de signalisation d'un niveau d'automatisation de conduite disponible.
[Fig. 2b] La figure 2b montre le volant de direction avec le premier indicateur lumineux dans un état de signalisation d'un niveau d'automatisation de conduite actif.
[Fig. 3] La figure 3 montre le volant de direction avec un deuxième indicateur lumineux dans un état de signalisation d'une requête de pilotage manuel.
[Fig. 4] La figure 4 montre le volant de direction avec un troisième indicateur lumineux dans un état de signalisation d'une transition de responsabilité de conduite.
[Fig. 5a] La figure 5a représente le volant de direction avec le premier indicateur lumineux signalant un niveau d'automatisation de conduite actif et le deuxième indicateur lumineux signalant une requête de pilotage manuel avec une première intensité lumineuse.
[Fig. 5b] La figure 5b représente le volant de direction de la figure 5a dont le deuxième indicateur lumineux présente une deuxième intensité lumineuse.
[Fig. 5c] La figure 5c représente de façon schématique une action de prise en mains par le conducteur du volant de direction des figures 5a, 5b.
[Fig. 6a] La figure 6a représente de façon schématique une première séquence d'animation lumineuse des premier et troisième indicateurs lumineux, avec une première intensité lumineuse.
[Fig. 6b] La figure 6b représente de façon schématique la première séquence d'animation lumineuse avec une deuxième intensité lumineuse.
[Fig. 7] La figure 7 représente de façon schématique une action de désactivation du niveau d'automatisation de conduite actif signalé par le premier indicateur lumineux.
[Fig. 8a] La figure 8a montre une première étape d'éclairage du troisième indicateur lumineux lors d'une deuxième séquence d'animation lumineuse.
[Fig. 8b] La figure 8b montre une deuxième étape d'extinction progressive de l'éclairage du troisième indicateur lumineux de la deuxième séquence d'animation lumineuse.
[Fig. 8c] La figure 8c représente le volant de direction dans un état neutre avec tous les indicateurs lumineux éteints à la fin de la deuxième séquence d'animation lumineuse.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

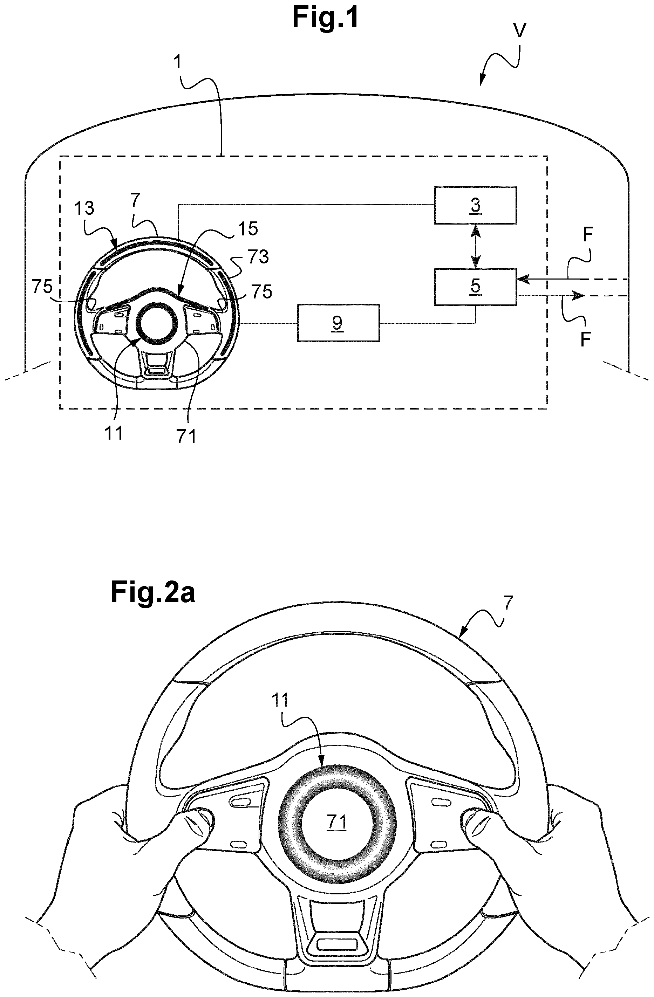

L'invention concerne un système de commande 1 destiné à équiper un véhicule automobile V, dont seule une partie est représentée de façon très schématisée sur la figure 1. Le véhicule automobile V est par exemple une voiture, mais il peut s'agir d'un autre type de véhicule, tel qu'un camion, ou un bus. Le véhicule automobile V peut être piloté selon un mode manuel par un conducteur sans assistance automatisée. De plus, il s'agit d'un véhicule automobile V dit autonome ou semi-autonome, c'est-à-dire également capable d'aider le conducteur dans certaines manoeuvres ou d'assurer tout ou partie de la conduite selon un mode dit automatisé ou semi-automatisé.

On peut prévoir plusieurs niveaux d'automatisation de conduite différents, par exemple trois, quatre, voire cinq niveaux, offrant de plus en plus d'automatisation. Les niveaux d'automatisation sont classés du plus faible niveau d'automatisation au plus élevé c'est-à-dire au plus assisté. La supervision et l'intervention humaine requises diminuent avec l'augmentation des niveaux d'automatisation. Ainsi, le véhicule automobile V peut être piloté selon un mode manuel avec un niveau d'automatisation nul, qui peut aussi être dénommé niveau zéro, ou selon l'un ou l'autre des niveaux d'automatisation de conduite, par exemple de un à cinq selon la proposition d'échelle de l'organisation internationale « SAE International ».

À cet effet, le système de commande 1 peut comprendre notamment au moins un processeur ou un ordinateur ou un calculateur embarqué dans le véhicule automobile V. le système de commande 1 comporte un ou plusieurs moyens de traitement permettant la gestion de l'automatisation de la conduite.

En particulier, le système de commande 1 comporte un module 3 de pilotage automatisé, un dispositif d'aide à la conduite 5, un organe de contrôle de direction 7 du véhicule automobile V. Le conducteur est humain par opposition au module 3 de pilotage automatisé.

Un ou plusieurs éléments du système de commande 1 peuvent échanger des données et comprendre pour cela des moyens de communication correspondants. La communication peut se faire par exemple via un réseau CAN pour Controller Area Network en anglais, sans être limitée à un tel réseau.

Le module 3 de pilotage automatisé est configuré pour gérer l'automatisation de la conduite. Autrement dit, il permet de piloter le véhicule automobile V. Plus précisément, il permet de piloter un ou plusieurs actionneurs, connus par ailleurs, de commande automatique du véhicule automobile V, pour réaliser des manoeuvres de manière automatisée ou semi-automatisée. Le module 3 de pilotage automatisé est donc connecté à de tels actionneurs, de façon à commander des organes de direction et des organes moteurs du véhicule automobile V. Par exemple, au quatrième niveau, le module 3 de pilotage automatisé peut prendre l'ensemble des décisions relatives à la conduite du véhicule, c'est-à-dire au moins un contrôle simultané du freinage, de l'accélération et de la direction du véhicule.

Le module 3 de pilotage automatisé peut être commandé par le dispositif d'aide à la conduite 5. Le dispositif d'aide à la conduite 5 est configuré pour échanger des données avec le module 3 de pilotage automatisé.

De façon générale, le dispositif d'aide à la conduite 5 comporte un ou plusieurs moyens de traitement pour identifier une configuration routière, pour déterminer en fonction de la configuration routière identifiée au moins un niveau d'automatisation de conduite adapté ou si le conducteur doit piloter manuellement le véhicule automobile V, pour détecter un niveau d'automatisation de conduite actif et pour détecter une commutation notamment entre un niveau d'automatisation de conduite et le mode manuel.

Comme schématisé par les flèches F en partie en pointillés sur la figure 1, le dispositif d'aide à la conduite 5 est capable de communiquer avec divers équipements ou appareils (non représentés sur les figures). Notamment, le dispositif d'aide à la conduite 5 peut communiquer avec des moyens de détection ou capteurs embarqués dans le véhicule automobile V, ou des systèmes distants.

En particulier, le dispositif d'aide à la conduite 5 peut recevoir une ou plusieurs données représentatives d'une configuration routière. La configuration routière concerne la scène de route où circule le véhicule automobile V, les autres utilisateurs de la scène de route, tels que les véhicules ou piétons, les panneaux de signalisation, d'éventuels animaux, ou encore des obstacles présents sur la scène de route. De telles données sur la scène de route peuvent avoir été capturées par l'un ou plusieurs des capteurs. La configuration routière peut également concerner des conditions de route, comme des conditions météorologiques telles que la pluie, la neige ou la présence de verglas sur la route. Ces données relatives aux conditions de route peuvent provenir de capteurs embarqués sur le véhicule automobile V ou de bases de données centralisées par exemple. En alternative ou en complément le dispositif d'aide à la conduite 5 peut recevoir des données de géolocalisation. Le dispositif d'aide à la conduite 5 peut analyser une ou plusieurs des données reçues, et sur la base de ces données, identifier la configuration routière.

Le dispositif d'aide à la conduite 5 peut également recevoir une ou plusieurs données représentatives d'un état de l'utilisateur par exemple en provenance d'au moins un capteur embarqué tel qu'un capteur DMS pour « Driver Monitoring System » en anglais, et analyser les données reçues pour identifier par exemple si le conducteur est dans un état de somnolence, distrait ou au contraire s'il est éveillé, concentré. L'état du conducteur peut être pris en compte par le dispositif d'aide à la conduite 5, pour moduler en fonction la signalisation d'un niveau d'automatisation disponible.

Par ailleurs, le dispositif d'aide à la conduite 5 peut être connecté à un organe de commande 9 du système de commande 1. Cet organe de commande 9 est destiné à être utilisé, manipulé, par le conducteur pour sélectionner, changer de niveau d'automatisation de conduite. Il peut être agencé dans le véhicule automobile V, à tout emplacement jugé pratique, ergonomique, pour être actionné par le conducteur. Par exemple de façon non limitative, il peut s'agir d'une commande au volant, dans la zone des commodos, sur le tableau de bord, près du levier de vitesse, ou tout autre emplacement adéquat choisi par le constructeur automobile. Selon une alternative, il est envisageable que l'organe de commande 9 soit réalisé par une surface tactile telle qu'un écran tactile.

Le dispositif d'aide à la conduite 5 peut recevoir des données représentatives d'un niveau d'automatisation de conduite activé par le conducteur par l'intermédiaire de l'organe de commande 9. Le dispositif d'aide à la conduite 5 peut ainsi détecter une commutation entre le mode manuel et un niveau d'automatisation de conduite, et entre les niveaux d'automatisation de conduite.

Le dispositif d'aide à la conduite 5 est configuré pour échanger au moins une donnée relative à un niveau d'automatisation de conduite sélectionné et validé par l'intermédiaire de l'organe de commande 9 avec le module 3 de pilotage automatisé.

Le dispositif d'aide à la conduite 5 connaît donc l'état de conduite du véhicule automobile V, c'est-à-dire si le conducteur pilote manuellement le véhicule automobile V ou avec une assistance automatisée du module 3 de pilotage automatisé selon l'un des niveaux d'automatisation.

Le dispositif d'aide à la conduite 5 peut encore recevoir des données représentatives d'un couple exercé sur le volant de direction et/ou d'un couple exercé sur une pédale de frein ou d'accélérateur. Le dispositif d'aide à la conduite 5 est programmé pour générer un ou plusieurs signaux d'avertissement à destination du conducteur. Il s'agit en particulier d'avertissements visuels, notamment par une signalétique lumineuse sur l'organe de contrôle de direction 7 comme décrit par la suite. En complément, le dispositif d'aide à la conduite 5 peut générer un avertissement sonore ou encore par retour haptique. Le système de commande 1 peut comporter à cet effet un dispositif d'avertissement sonore et/ou par retour haptique. Le retour haptique peut se faire au niveau de l'organe de contrôle de direction 7. D'autres avertissements visuels peuvent être envisagés pour afficher des informations, par exemple textuelles. Le système de commande 1 peut comporter à cet effet un dispositif d'affichage permettant un affichage tête haute et/ou agencé sur le tableau de bord et/ou sur la planche de bord.

En particulier, le dispositif d'aide à la conduite 5 peut générer une commande d'avertissement relative aux informations ci-après. Lorsqu'il détermine un niveau d'automatisation de conduite qu'il est possible d'adopter, il peut générer une commande pour signaler le niveau d'automatisation de conduite disponible déterminé. Lorsqu'il détecte un niveau d'automatisation de conduite actif, il peut générer une commande pour signaler ce niveau d'automatisation actif. Lorsqu'il détermine en fonction de la configuration routière que le véhicule automobile doit être piloté par le conducteur, il peut générer une commande pour signaler au moins une requête de pilotage manuel du véhicule automobile V. Lorsqu'il détecte une commutation entre un niveau d'automatisation de conduite et le mode manuel, il peut générer une commande pour signaler une transition de responsabilité de conduite entre le module 3 de pilotage automatisé et le conducteur.

L'organe de contrôle de direction 7 peut être contrôlé par le conducteur lorsque le véhicule automobile V est piloté manuellement ou par le module 3 de pilotage automatisé lorsqu'un niveau d'automatisation est actif, notamment à partir du troisième niveau d'automatisation.

Cet organe de contrôle de direction 7 est avantageusement destiné à être disposé dans le champ de vision du conducteur dans l'habitacle du véhicule automobile V. Il s'agit dans les exemples illustrés d'un volant de direction. D'autres organes de contrôle de direction peuvent être envisagés, comme par exemple de façon non exhaustive un joystick, une manette, un levier. De tels organes sont avantageusement agencés de façon ergonomique dans le véhicule automobile V, pour faciliter l'actionnement par le conducteur et de façon à être dans le champ de vision du conducteur.

En particulier, l'organe de contrôle de direction 7 comporte au moins une première région, une deuxième région, et une troisième région. La première région peut être une région centrale, la deuxième région une région périphérique, et la troisième région une région intermédiaire entre les deux. Selon l'exemple du volant de direction, la première région est un moyeu 71, la deuxième région est une couronne périphérique 73, et la troisième région est réalisée par au moins une branche 75, par exemple deux branches 75, reliant le moyeu 71 à la couronne périphérique 73. Chaque région 71, 73, 75 peut être associée à la signalisation d'au moins une information prédéfinie à l'attention du conducteur.

L'organe de contrôle de direction 7, tel que le volant de direction, comporte au moins un indicateur lumineux 11, 13, 15. Le ou les indicateurs lumineux 11, 13, 15 sont destinés à être activés, allumés de façon statique ou par clignotement, ou encore à changer de couleur, de façon à alerter le conducteur. Le ou les indicateurs lumineux 11, 13, 15 sont prévus pour la signalisation d'un niveau d'automatisation de conduite disponible, d'un niveau d'automatisation de conduite actif, d'au moins une requête de pilotage manuel du véhicule automobile, et d'une transition de responsabilité de conduite. De façon avantageuse, plusieurs indicateurs lumineux 11, 13, 15 peuvent être prévus, chacun étant associé à la signalisation d'au moins une information prédéfinie à l'attention du conducteur.

En particulier, la première région telle que le moyeu 71 du volant de direction, est munie d'au moins un premier indicateur lumineux 11. Il peut signaler un niveau d'automatisation de conduite disponible ou un niveau d'automatisation de conduite actif.

La deuxième région, telle que la couronne périphérique 73 du volant de direction, est munie d'au moins un deuxième indicateur lumineux 13. Il peut signaler au moins une requête de pilotage manuel. Ce deuxième indicateur lumineux 13 peut être conformé pour indiquer au conducteur où il doit remettre ses mains. Bien entendu, le conducteur peut aussi reprendre le contrôle du véhicule automobile V en mode manuel à son initiative, à tout moment, sans attendre une telle requête.

La troisième région, par exemple réalisée par la ou les branches 75 reliant le moyeu 71 à la couronne périphérique 73 du volant de direction, peut être munie d'au moins un troisième indicateur lumineux 15. Il peut signaler une transition de responsabilité de conduite.

Le ou les indicateurs lumineux 11, 13, 15 comprennent au moins une source lumineuse. La source lumineuse peut émettre différentes couleurs de lumière, de façon à permettre une indication lumineuse selon un code couleur prédéfini. La source lumineuse peut être d'intensité variable, par exemple de façon à susciter selon l'intensité une réaction plus ou moins rapide ou urgente du conducteur.

Le ou les indicateurs lumineux 11, 13, 15 peuvent comporter respectivement au moins une série de diodes électroluminescentes formant un bandeau lumineux.

Ils peuvent comprendre un matériau translucide ou transmettant la lumière, associé à la source lumineuse. La série de diodes électroluminescentes peut par exemple être noyée dans un tel matériau translucide ou transmettant la lumière.

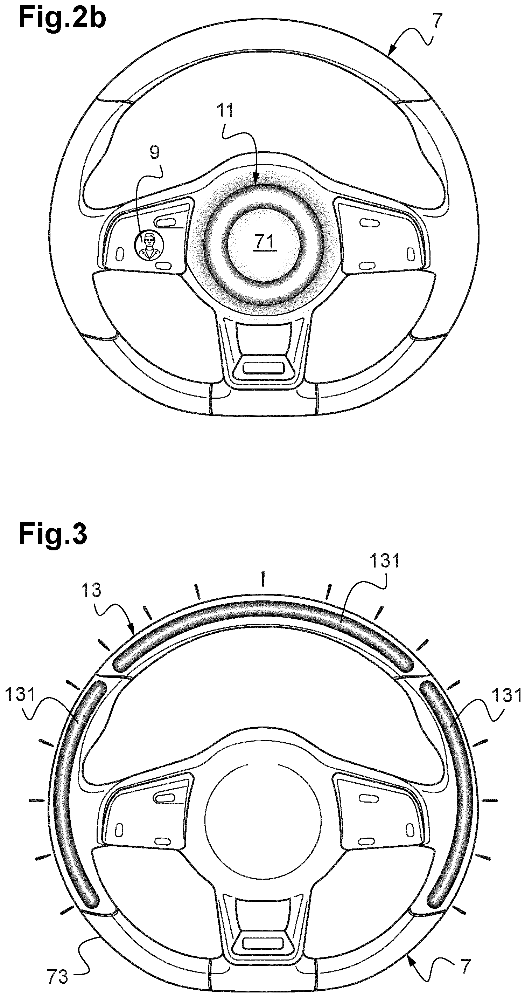

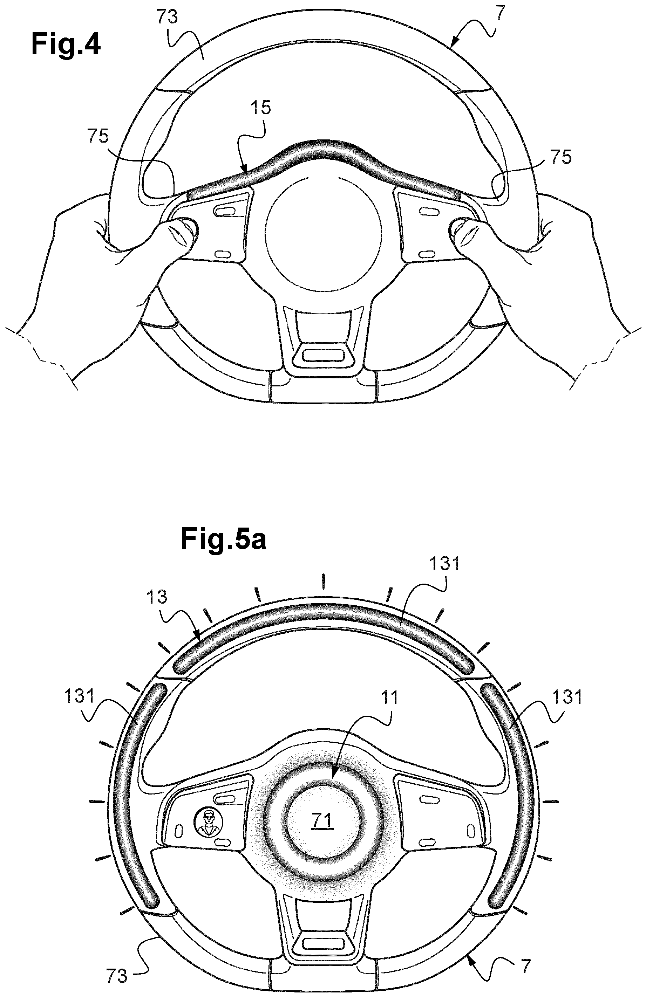

Chaque indicateur lumineux 11, 13, 15 peut présenter une forme géométrique continue ou en alternative être formé de plusieurs segments discontinus. Selon les exemples illustrés, le premier indicateur lumineux 11 (figures 2a, 2b) et le troisième indicateur lumineux 15 (figure 4) sont continus tandis que le deuxième indicateur lumineux 13 (figure 3) comporte plusieurs segments 131 discontinus, par exemple trois segments 131.

En particulier, le ou chaque indicateur lumineux 11, 13, 15 (figures 2a à 4) peut définir une surface lumineuse plus ou moins étendue. Sa forme peut être adaptée à celle de l'organe de contrôle de direction 7 tel que le volant. La forme de l'indicateur ou de chaque indicateur lumineux 11, 13, 15 suit notamment la forme ou le contour de la région 71, 73, 75 associée, c'est-à-dire au niveau de laquelle il est agencé.

De façon non limitative, au moins un indicateur lumineux peut présenter une forme générale au moins en partie circulaire. C'est le cas par exemple comme représenté sur les figures 2a, 2b, du premier indicateur lumineux 11 circulaire prévu dans l'exemple du volant de direction, sur le moyeu 71 qui peut être circulaire.

Lorsqu'un indicateur lumineux comprend un ensemble de segments lumineux, leur forme peut aussi être complémentaire de celle de l'organe de contrôle de direction 7 et en particulier de la région associée. C'est le cas, notamment selon l'exemple de la figure 3, du deuxième indicateur lumineux 13 comportant plusieurs, ici trois, segments lumineux 131. Les segments lumineux 131 forment des arcs de cercle suivant la courbe de la couronne périphérique 73 du volant de direction.

De plus dans l'exemple du volant de direction de la figure 4, la forme du troisième indicateur lumineux 15 suit la forme de la branche ou des branches 75 formant la troisième région et au centre elle suit une partie du contour du moyeu 71.

Le dispositif d'aide à la conduite 5 est configuré pour modifier l'état d'un ou plusieurs indicateurs lumineux 11, 13, 15. En mode manuel, tant que le conducteur garde en mains le volant de direction, les indicateurs lumineux 11, 13, 15 ne sont pas destinés à être allumés.

Le dispositif d'aide à la conduite 5 peut piloter un éclairage d'un ou plusieurs indicateurs lumineux 11, 13, 15 selon un code couleur prédéfini. Il peut piloter l'éclairage d'un indicateur lumineux 11, 13, 15 donné de couleurs différentes selon l'information à signaler. Il peut également piloter l'éclairage en même temps de plusieurs indicateurs 11, 13, 15 selon des couleurs différentes. Par exemple, le dispositif d'aide à la conduite 5 peut piloter un jeu de lumières de couleurs différentes selon le niveau d'automatisation de conduite qui est actif ou disponible, ou dans le cas d'une requête de pilotage manuel. La couleur de lumière peut également différer lorsque le dispositif d'aide à la conduite 5 détecte que le véhicule approche d'une zone de désengagement du module 3 de pilotage automatisé (ceci est possible notamment à partir du deuxième niveau) et selon le temps ou la distance restant avant le désengagement du module 3 de pilotage automatisé. Autrement dit, l'état d'un ou plusieurs indicateurs lumineux 11, 13, 15 peut être modifié lorsque le véhicule approche des conditions limites de fonctionnement du mode semi-automatisé ou automatisé (comme une zone de travaux, ou une zone de péage). Un ou plusieurs seuils peuvent être associés aux conditions limites de fonctionnement. La couleur peut varier selon le seuil franchi.

Le dispositif d'aide à la conduite 5 peut piloter un éclairage statique d'un ou plusieurs indicateurs lumineux 11, 13, 15. L'éclairage statique est par exemple représentatif d'un niveau d'automatisation actif. En se référant à l'exemple particulier de la figure 2b, le premier indicateur lumineux 11 sur le moyeu 71 s'allume de façon statique lorsqu'un niveau d'automatisation est actif.

Le dispositif d'aide à la conduite 5 peut piloter un éclairage par clignotement d'un ou plusieurs indicateurs lumineux 11, 13, 15. Ceci permet de signifier qu'une action du conducteur est attendue.

C'est le cas notamment d'une requête de pilotage manuel. En se référant à l'exemple particulier du volant de direction schématisé sur la figure 3, le deuxième indicateur lumineux 13 au niveau de la couronne périphérique 73, peut clignoter afin d'inciter le conducteur à remettre ses mains sur le volant de direction. La requête de pilotage manuel peut être activée si, en mode manuel le conducteur enlève ses mains du volant de direction, et jusqu'à ce qu'il remette ses mains sur le volant de direction. En alternative, la requête de pilotage manuel peut être activée si le dispositif d'aide à la conduite détecte, notamment en fonction de la configuration routière, que le pilotage doit passer d'un mode semi-automatisé ou automatisé au mode manuel.

Le dispositif d'aide à la conduite 5 peut piloter l'éclairage d'un ou plusieurs indicateurs lumineux 11, 13, 15 selon au moins une séquence d'animation lumineuse. On entend par séquence d'animation lumineuse, un jeu d'allumage des indicateurs lumineux 11, 13, 15 avec un éclairage statique, ou par clignotement ou une combinaison d'éclairage statique et de clignotements, et/ou avec une intensité lumineuse variable et/ou selon des règles d'allumage et d'extinction pour définir par exemple un motif lumineux, voire un déplacement ou chemin lumineux qui peut se faire avec une vitesse constante ou non.

En particulier, le dispositif d'aide à la conduite 5 peut piloter l'éclairage des indicateurs lumineux 11, 13, 15 selon des séquences d'animation lumineuse différentes. Par exemple, le dispositif d'aide à la conduite 5 peut piloter l'éclairage d'un des indicateurs lumineux, par exemple le premier indicateur lumineux 11, selon une séquence d'animation lumineuse, lorsqu'un niveau d'automatisation de conduite est disponible. Et, le dispositif d'aide à la conduite 5 peut piloter l'éclairage d'un autre indicateur lumineux, par exemple le deuxième indicateur lumineux 13, selon une autre séquence d'animation lumineuse, différente de celle du premier indicateur lumineux 11, lorsque le dispositif d'aide à la conduite 5 détermine que le véhicule automobile doit être piloté par le conducteur.

Selon un autre exemple, le dispositif d'aide à la conduite 5 (figure 1) peut piloter un éclairage par clignotement d'un indicateur lumineux pour signifier un niveau d'automatisation disponible. En se référant à l'exemple particulier du volant de direction schématisé sur la figure 2a, le premier indicateur lumineux 11 sur le moyeu 71 peut clignoter pour signifier le niveau d'automatisation disponible.

Le dispositif d'aide à la conduite 5 (figure 1) peut notamment piloter un éclairage par clignotement à des fréquences différentes. Il peut piloter l'éclairage par clignotement d'au moins deux indicateurs lumineux 11, 13, 15 à des fréquences différentes, ou un même indicateur lumineux 11, 13, 15 à des fréquences différentes lors d'une commande donnée ou au cours de différentes commandes. Par exemple, la fréquence de clignotement peut être augmentée lorsqu'une action rapide du conducteur est souhaitée. De façon non limitative, la fréquence de clignotement peut par exemple être de l'ordre de 0,5Hz ou de 1Hz.

En reprenant les exemples précédents, de façon non limitative, le dispositif d'aide à la conduite 5 peut piloter l'éclairage par clignotement du premier indicateur lumineux 11 à une première fréquence, lorsqu'un niveau d'automatisation de conduite est disponible (figure 2a). Il peut piloter l'éclairage par clignotement du deuxième indicateur lumineux 13 à une deuxième fréquence pour une requête de pilotage manuel (figure 3). La deuxième fréquence peut être supérieure à la première fréquence. La première fréquence est par exemple de l'ordre de 0,5Hz (2s entre chaque répétition). La deuxième fréquence est par exemple de l'ordre de 1Hz.

En se référant de nouveau à la figure 1, dans le cas de plusieurs indicateurs lumineux 11, 13, 15, le dispositif d'aide à la conduite 5 peut piloter l'éclairage statique d'au moins un des indicateurs lumineux 11, 13, 15 et en même temps piloter l'éclairage par clignotement d'au moins un autre des indicateurs lumineux 11, 13, 15.

Le dispositif d'aide à la conduite 5 peut piloter l'éclairage statique ou par clignotement d'un ou plusieurs indicateurs lumineux 11, 13, 15 sur une période prédéfinie ou jusqu'à la détection d'une action du conducteur.

Le dispositif d'aide à la conduite 5 peut piloter l'éclairage statique du premier indicateur lumineux 11 sur le moyeu 71 du volant de direction de façon à signifier le niveau d'automatisation actif, tant que ce dernier reste actif. De façon non exhaustive, cela peut être le cas jusqu'à ce que le conducteur reprenne le contrôle du pilotage suite à l'émission d'une requête de pilotage manuel ou volontairement par le conducteur, ou jusqu'au déclenchement d'une manoeuvre d'arrêt d'urgence ou à la suite d'une telle manoeuvre, ou encore jusqu'à la détection d'un niveau d'automatisation supérieur disponible.

Le dispositif d'aide à la conduite 5 peut piloter le clignotement d'un indicateur lumineux 11, 13, 15 sur une période prédéfinie et arrêter le clignotement à la fin de cette période prédéfinie, notamment lorsqu'une action du conducteur n'est pas primordiale pour la sécurité. C'est le cas notamment lorsqu'un niveau d'automatisation est disponible. Le dispositif d'aide à la conduite 5 peut arrêter le clignotement à la fin de la période prédéfinie si le conducteur n'active pas le niveau d'automatisation disponible mais préfère par exemple garder le contrôle du pilotage manuel. Selon l'exemple précédent de la figure 2a, lorsqu'un niveau d'automatisation de conduite, notamment le troisième ou quatrième niveau, est disponible, le dispositif d'aide à la conduite 5 peut piloter l'éclairage par clignotement du premier indicateur lumineux 11, un nombre prédéfini de fois, par exemple de façon non limitative quatre fois.

À l'inverse, le dispositif d'aide à la conduite 5 peut piloter le clignotement d'un indicateur lumineux 11, 13, 15 tant qu'une action du conducteur n'est pas détectée, notamment pour des raisons de sécurité. C'est le cas par exemple lorsque le véhicule est piloté manuellement et que le dispositif d'aide à la conduite 5 détermine à partir de mesures d'au moins un capteur embarqué tel qu'un capteur DMS que le conducteur est distrait ou somnolent, si un niveau d'automatisation de conduite est disponible, tel que le troisième ou quatrième niveau, le dispositif d'aide à la conduite 5 peut piloter le clignotement d'un indicateur lumineux, tel que le premier indicateur lumineux 11, jusqu'à ce que le conducteur active ce niveau d'automatisation disponible, par exemple en appuyant sur l'organe de commande 9.

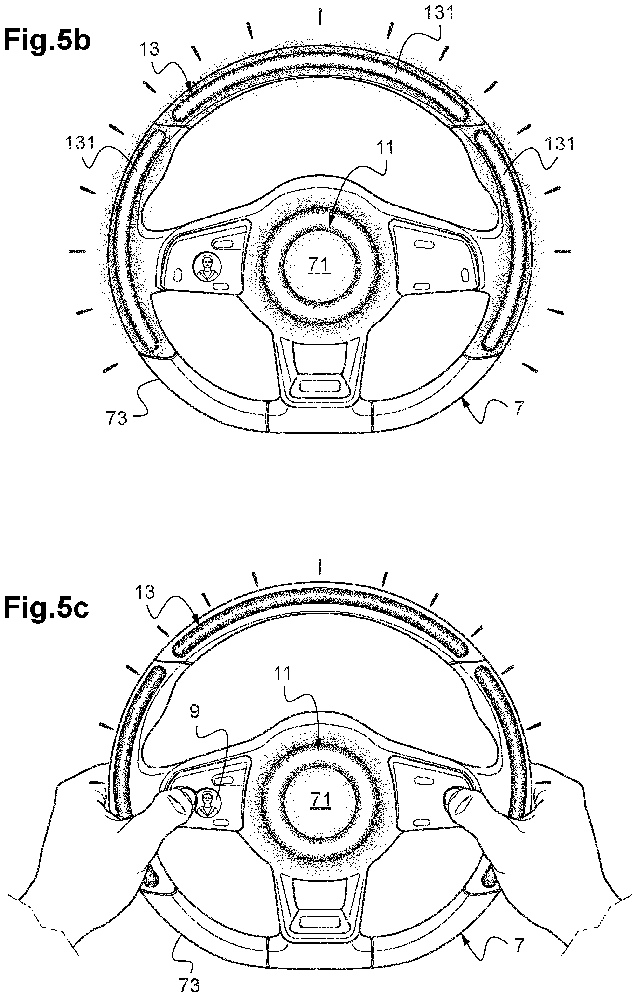

Cela peut être le cas selon un autre exemple lorsqu'un niveau d'automatisation est actif et que le dispositif d'aide à la conduite 5 détermine que le conducteur doit reprendre le contrôle manuel du pilotage. Selon l'exemple schématisé sur les figures 5a, 5b, le premier indicateur lumineux 11 est allumé de façon statique pour signaler le niveau d'automatisation actif tandis que le deuxième indicateur lumineux 13 clignote jusqu'à ce que le conducteur reprenne le contrôle du pilotage. La fréquence de clignotement peut être augmentée, par exemple en passant de 0,5Hz à 1Hz, afin d'inciter d'autant plus le conducteur à prendre le contrôle du pilotage. Le dispositif d'aide à la conduite 5 peut commander l'arrêt du clignotement du premier indicateur lumineux 11, une fois le pilotage contrôlé manuellement par le conducteur, notamment en remettant ses mains sur le volant, comme schématisé sur la figure 5c, et en désactivant le niveau d'automatisation via l'organe de commande 9.

Le dispositif d'aide à la conduite 5 peut piloter l'éclairage statique ou par clignotement d'un ou plusieurs indicateurs lumineux 11, 13, 15 selon différentes intensités lumineuses. Il peut faire varier l'intensité lumineuse d'un indicateur lumineux donné selon l'information à signifier. Il peut piloter l'éclairage d'un des indicateurs lumineux avec une intensité lumineuse prédéfinie et piloter l'éclairage d'un autre indicateur avec une autre intensité lumineuse différente.

En se référant aux figures 1 à 2b, le dispositif d'aide à la conduite 5 peut piloter l'éclairage d'un indicateur lumineux, par exemple du premier indicateur lumineux 11, avec une première intensité lumineuse (figure 2a) lorsqu'un niveau d'automatisation est disponible et avec une deuxième intensité lumineuse (figure 2b) différente de la première intensité lumineuse lorsqu'un niveau d'automatisation est actif. La première intensité lumineuse peut être choisie inférieure à la deuxième intensité lumineuse. La première intensité lumineuse est par exemple à 50%. La deuxième intensité lumineuse est par exemple à 100%.

Selon un autre exemple schématisé sur les figures 5a, 5b, l'intensité lumineuse d'un indicateur lumineux, par exemple du deuxième indicateur lumineux 13, peut alterner entre une première intensité lumineuse (figure 5a) et une deuxième intensité lumineuse (figure 5b) supérieure à la première intensité lumineuse, de façon à obtenir l'effet de clignotement. Par exemple, l'intensité lumineuse peut alterner entre 50% et 100%.

En se référant encore à l'exemple des figures 5a, 5b, lorsque le deuxième indicateur lumineux 13 clignote alternativement avec une intensité variable, le premier indicateur lumineux 11, quant à lui, peut être éclairé avec la deuxième intensité lumineuse par exemple à 100% pour signifier le niveau d'automatisation de conduite actif.

Selon encore un autre exemple, lorsque le véhicule automobile V approche des conditions limites de fonctionnement du mode semi-automatisé ou automatisé, l'intensité lumineuse d'un ou plusieurs indicateurs lumineux 11, 13, 15 peut varier selon le seuil franchi. L'intensité lumineuse peut augmenter avec l'approche d'un seuil haut, et au contraire décroître avec l'approche d'un seuil bas. Par ailleurs, le dispositif d'aide à la conduite 5 est configuré pour piloter au moins une séquence d'animation lumineuse d'un ou plusieurs indicateurs lumineux 11, 13, 15, de façon à représenter une transition de responsabilité de conduite. L'indicateur lumineux 11, 13, 15 peut former un chemin lumineux au moins en partie linéaire et/ou circulaire. D'autres formes sont envisageables. Durant la séquence d'animation lumineuse, le dispositif d'aide à la conduite 5 peut piloter l'éclairage d'un ou plusieurs indicateurs lumineux 11, 13, 15, avec une intensité lumineuse évolutive jusqu'à atteindre une intensité lumineuse prédéfinie lorsque la transition de responsabilité de conduite est terminée. Selon une première séquence d'animation lumineuse, au moins un indicateur lumineux 11, 15 forme un chemin lumineux selon un premier sens. Ce premier sens est associé à une transition de responsabilité de conduite du conducteur vers le module 3 de pilotage automatisé. L'intensité lumineuse du ou des indicateurs lumineux 11, 15 peut être évolutive durant la transition de responsabilité de conduite, jusqu'à atteindre une intensité lumineuse prédéfinie (qui peut être nulle ou non nulle) lorsque la transition de responsabilité de conduite est terminée, c'est-à-dire lorsque le transfert de responsabilité est effectif.

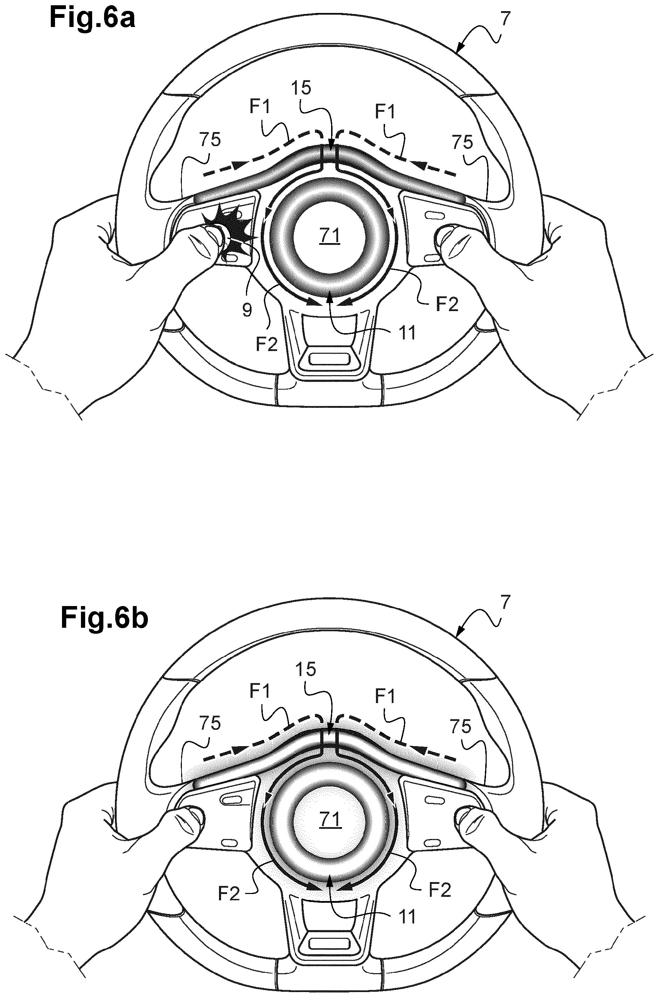

Un exemple particulier de la première séquence d'animation lumineuse est illustré sur les figures 6a, 6b. Lorsqu'un niveau d'automatisation est disponible (par exemple le troisième ou quatrième niveau) comme signifié par le premier indicateur lumineux 11, un transfert de responsabilité peut être initié lorsque le conducteur appuie sur l'organe de commande 9 pour activer le niveau d'automatisation disponible, comme représenté sur la figure 6a. Afin de signifier que la transition de responsabilité est en cours, le dispositif d'aide à la conduite 5 active d'abord l'éclairage progressif du troisième indicateur lumineux 15 selon une animation de la couronne périphérique 73 vers le centre comme schématisé par les flèches F1, puis active l'éclairage progressif du premier indicateur lumineux 11 également selon une animation de part et d'autre d'un premier point central de la branche formant la troisième région ou entre les deux branches 75 jusqu'à un point opposé, comme schématisé par les flèches F2. Cela donne l'impression de remplir de lumière progressivement le troisième indicateur lumineux 15 puis le premier indicateur lumineux 11. L'intensité lumineuse du troisième indicateur lumineux 15 et/ou du premier indicateur lumineux 11 peut ne pas être maximale, par exemple elle peut être à 50%. Tant que le conducteur garde ses mains sur le volant, l'intensité lumineuse peut rester à 50%.

Lorsque le conducteur lâche le volant, la transition de responsabilité de conduite peut se terminer. Pour cela, le dispositif d'aide à la conduite 5 réduit progressivement l'éclairage du troisième indicateur lumineux 15 selon une animation similaire depuis la couronne périphérique 73 jusqu'au centre comme schématisé par les flèches F1 sur la figure 6b, jusqu'à éteindre l'éclairage du troisième indicateur lumineux 15. Et, le dispositif d'aide à la conduite 5 augmente progressivement l'éclairage du premier indicateur lumineux 11 selon une animation similaire de part et d'autre d'un premier point central de la branche formant la troisième région ou par exemple entre les deux branches 75 jusqu'à un point opposé, comme schématisé par les flèches F2 sur la figure 6b, jusqu'à atteindre une intensité lumineuse prédéfinie, ici maximale à 100%, lorsque la transition de responsabilité de conduite est terminée.

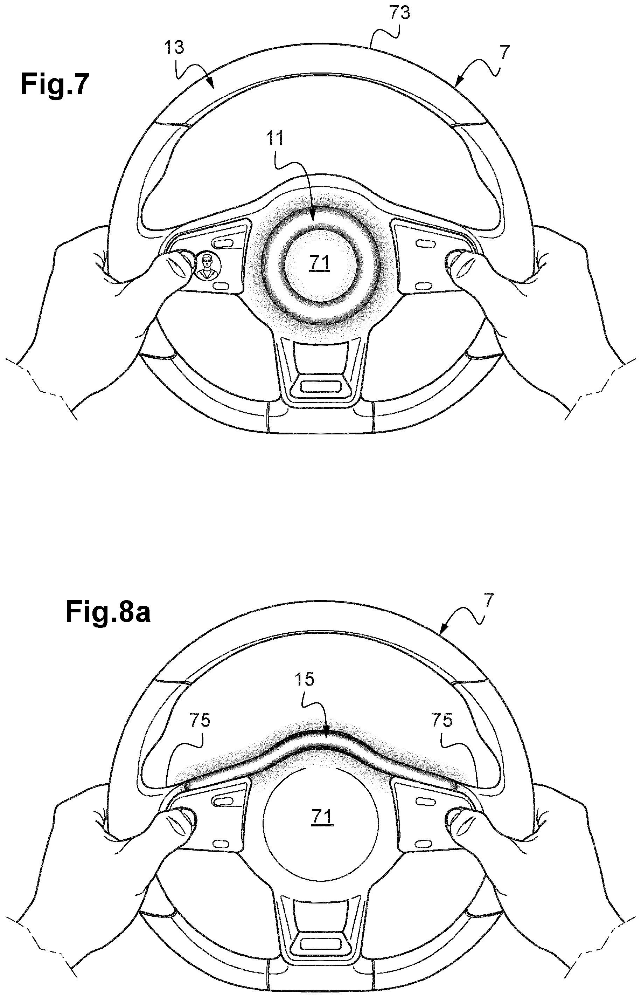

Dans le cas d'une transition de responsabilité de conduite du module 3 de pilotage automatisé vers le conducteur, le conducteur doit reprendre le contrôle du pilotage, comme signifié par le deuxième indicateur lumineux 13 (figures 5a, 5b). La transition de responsabilité de conduite du module de pilotage automatisé vers le conducteur peut commencer lorsque le conducteur place ses mains sur l'organe de contrôle de direction 7 tel que le volant de direction (figure 5c), ou agit sur une pédale de frein ou d'accélérateur, et qu'il désactive le niveau d'automatisation en cours, par exemple en appuyant sur l'organe de commande 9. Lorsque les mains de l'utilisateur sont détectées sur la couronne périphérique 73, le dispositif d'aide à la conduite 5 commande l'arrêt de l'éclairage du deuxième indicateur lumineux 13 (figure 7).

Une deuxième séquence d'animation lumineuse peut être mise en oeuvre. Selon la deuxième séquence d'animation lumineuse, au moins un indicateur lumineux 15 forme un chemin lumineux selon un deuxième sens. Le deuxième sens est opposé au premier sens. L'intensité lumineuse du ou des indicateurs lumineux 15 peut être régressive durant la transition de responsabilité de conduite, jusqu'à atteindre une intensité lumineuse nulle lorsque la transition de responsabilité de conduite est terminée, c'est-à-dire que le transfert de responsabilité est effectif et que le conducteur a repris le contrôle du pilotage.

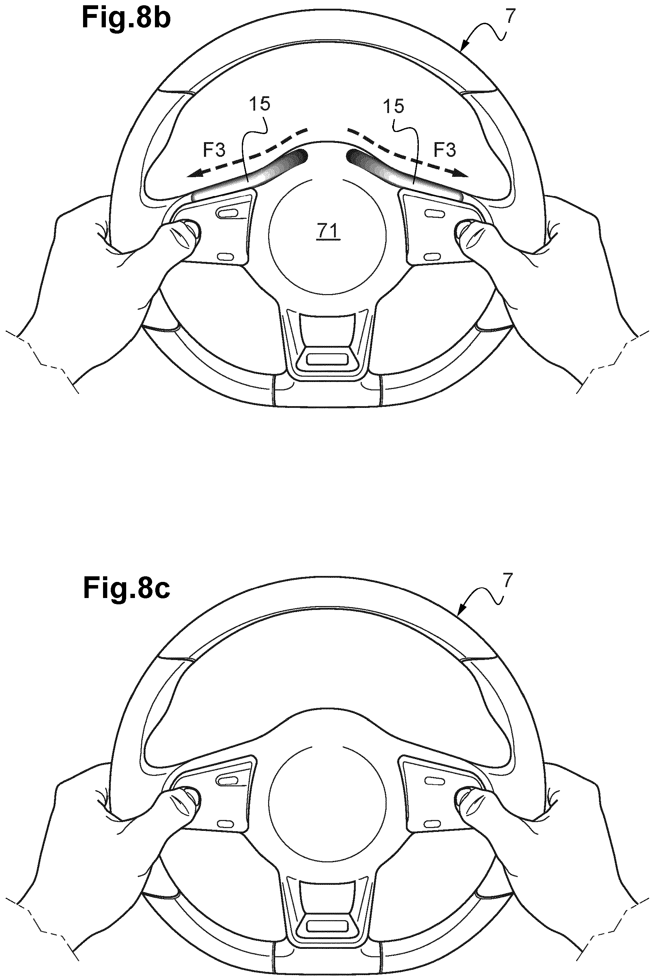

Un exemple particulier de la deuxième séquence d'animation lumineuse est illustré sur les figures 8a à 8c. Afin de signifier que la transition de responsabilité est en cours, le dispositif d'aide à la conduite 5 éteint le premier indicateur lumineux 11 et active l'éclairage du troisième indicateur lumineux 15 (figure 8a). L'intensité lumineuse du troisième indicateur lumineux 15 est diminuée progressivement selon une animation partant de part et d'autre du centre de la branche ou des branches 75 vers la couronne périphérique 73 comme schématisé par les flèches F3 sur la figure 8b. Ainsi, le troisième indicateur lumineux 15 s'éteint progressivement en commençant par le centre, par opposition à la première séquence d'animation lumineuse, jusqu'à s'éteindre complètement (figure 8c), lorsque la transition de responsabilité de conduite est terminée.

Par ailleurs, si dans le cas d'une requête de pilotage manuel, le conducteur ne reprend pas le contrôle du pilotage du véhicule automobile V, après une période prédéfinie par exemple 10s, 30s, 60s, le dispositif d'aide à la conduite 5 peut commander une manoeuvre d'arrêt d'urgence. Cette manoeuvre peut se faire sous le contrôle du module 3 de pilotage automatisé et dans ce cas le premier indicateur lumineux 11 reste allumé par exemple de façon statique. Dans d'autres cas, le module 3 de pilotage automatisé peut être désengagé, le premier indicateur lumineux 11 s'éteint, de sorte que le conducteur est responsable des actions du véhicule automobile lors d'une telle manoeuvre.

D'autres variantes de modifications de l'état du ou des indicateurs lumineux 11, 13, 15 sur l'organe de contrôle de direction 7 peuvent être envisagées sans sortir du cadre de la présente invention.

Ainsi, grâce aux indicateurs lumineux 11, 13, 15 tous agencés sur l'organe de contrôle de direction 7, toutes les informations nécessaires au conducteur telles que l'état, c'est-à-dire si le pilotage est manuel ou si un niveau de conduite automatisé est actif ou disponible, s'il doit reprendre le contrôle du pilotage de la conduite, ou encore lorsqu'un transfert de responsabilité a lieu, sont présentées et centralisées sur ce seul organe tel que le volant de direction qui est toujours visible par le conducteur même lorsque le pilotage est automatisé. L'éclairage est adapté à la géométrie du volant de direction. De plus, lorsqu'un transfert de responsabilité de conduite est initié, les étapes de ce transfert, c'est-à-dire la transition, sont détaillées sous forme de séquences d'animation lumineuses. Ainsi, le conducteur peut savoir si la transition n'est qu'à mi-chemin par exemple ou lorsqu'elle est terminée. Ceci permet d'éviter qu'il ne se méprenne sur qui a effectivement la responsabilité de conduite.

## Revendications

1. Système de commande (1) d'un véhicule automobile (V) configuré pour être piloté selon un mode manuel par un conducteur sans assistance automatisée ou selon différents niveaux d'automatisation de conduite au moyen d'un module (3) de pilotage automatisé du système de commande, le système de commande (1) comportant :
- un dispositif d'aide à la conduite (5) configuré pour analyser une configuration routière du véhicule automobile de façon à déterminer si un niveau d'automatisation de conduite est disponible et pour détecter un niveau d'automatisation de conduite actif, et
- un organe de contrôle de direction (7) du véhicule automobile (V),
- l'organe de contrôle de direction (7) comportant au moins :
• une première région (71) munie d'au moins un premier indicateur lumineux (11) configuré pour signaler un niveau d'automatisation de conduite disponible ou actif,
• une deuxième région (73) munie d'au moins un deuxième indicateur lumineux (13) configuré pour signaler au moins une requête de pilotage manuel, et
• une troisième région (75) munie d'au moins un troisième indicateur lumineux (15) pour signaler une transition de responsabilité de conduite entre le module (3) de pilotage automatisé et le conducteur et en ce que
- le dispositif d'aide à la conduite (5) étant configuré pour modifier l'état d'au moins un
des indicateurs lumineux (11, 13, 15) :
• lorsque le dispositif d'aide à la conduite (5) détermine un niveau d'automatisation de conduite disponible, de façon à signaler le niveau d'automatisation de conduite disponible déterminé, et
• lorsque le dispositif d'aide à la conduite (5) détecte un niveau d'automatisation de conduite actif, de façon à signaler le niveau d'automatisation de conduite actif détecté, et
• lorsque le dispositif d'aide à la conduite (5) détermine en fonction de la configuration routière que le véhicule automobile (V) doit être piloté par le conducteur, de façon à signaler au moins une requête de pilotage manuel du véhicule automobile (V), et
• lorsque le dispositif d'aide à la conduite (5) détecte une commutation entre un niveau d'automatisation de conduite et le mode manuel, de façon à signaler une transition de responsabilité de conduite entre le module (3) de pilotage automatisé et le conducteur.

2. Système de commande (1) selon la revendication précédente, dans lequel l'organe de contrôle de direction (7) est un volant de direction comportant :
- un moyeu (71) muni dudit au moins un premier indicateur lumineux (11),
- une couronne périphérique (73) munie dudit au moins un deuxième indicateur lumineux (13), et
- au moins une branche (75) reliant le moyeu (71) à la couronne périphérique (73), et munie dudit au moins un troisième indicateur lumineux (15).

3. Système de commande (1) selon l'une des revendications précédentes, dans lequel au moins un des indicateurs lumineux (11, 13, 15) comporte au moins une source lumineuse configurée pour émettre différentes couleurs de lumière, et dans lequel le dispositif d'aide à la conduite (5) est configuré pour piloter un éclairage dudit au moins un indicateur lumineux (11, 13, 15) selon un code couleur prédéfini.

4. Système de commande (1) selon l'une des revendications précédentes, dans lequel au moins un des indicateurs lumineux (11, 13, 15) comporte au moins une source lumineuse d'intensité variable et dans lequel le dispositif d'aide à la conduite (5) est configuré pour piloter l'éclairage dudit au moins un indicateur lumineux (11, 13, 15) avec une première intensité lumineuse lorsqu'un niveau d'automatisation est disponible et avec une deuxième intensité différente de la première intensité lorsqu'un niveau d'automatisation est actif.

5. Système de commande (1) selon l'une quelconque des revendications précédentes, dans lequel le dispositif d'aide à la conduite (5) est configuré pour piloter :
- un éclairage dudit au moins un premier indicateur lumineux (11) selon une séquence d'animation lumineuse, lorsqu'un niveau d'automatisation de conduite est disponible,
- un éclairage dudit au moins un deuxième indicateur lumineux (13) selon une autre séquence d'animation lumineuse, lorsque le dispositif d'aide à la conduite (5) détermine que le véhicule automobile (V) doit être piloté par le conducteur.

6. Système de commande (1) selon l'une des revendications précédentes, dans lequel le dispositif d'aide à la conduite (5) est configuré pour piloter au moins une séquence d'animation lumineuse d'au moins un des indicateurs lumineux (11, 13, 15) représentant la transition de responsabilité de conduite.

7. Système de commande (1) selon la revendication précédente, dans lequel le dispositif d'aide à la conduite (5) est configuré pour piloter :
- une première séquence d'animation lumineuse de sorte que ledit au moins un indicateur lumineux (11, 13, 15) forme un chemin lumineux selon un premier sens, associé à une transition de responsabilité de conduite du conducteur vers le module (3) de pilotage automatisé, et
- une deuxième séquence d'animation lumineuse de sorte que ledit au moins un indicateur lumineux (11, 13, 15) forme un chemin lumineux selon un deuxième sens, associé à une transition de responsabilité de conduite du module (3) de pilotage automatisé vers le conducteur.

8. Système de commande (1) selon la revendication 4 en combinaison avec l'une des revendications 6 ou 7, dans lequel le dispositif d'aide à la conduite (5) est configuré pour piloter une séquence d'animation lumineuse dudit au moins un indicateur lumineux (11, 13, 15) avec une intensité lumineuse évolutive durant la transition de responsabilité de conduite, jusqu'à atteindre une intensité lumineuse prédéfinie lorsque la transition de responsabilité de conduite est terminée.

9. Véhicule automobile (V) configuré pour être piloté selon un mode manuel par un conducteur sans assistance automatisée ou selon différents niveaux d'automatisation de conduite, **caractérisé en ce qu'**il comporte un système de commande (1) selon l'une des revendications précédentes.

## Patentansprüche

1. Steuersystem (1) eines Kraftfahrzeugs (V), das konfiguriert ist, gemäß einem manuellen Betrieb von einem Fahrer ohne automatisierte Assistenz oder gemäß verschiedenen Fahrautomatisierungsstufen mittels eines automatisierten Steuermoduls (3) des Steuersystems gesteuert zu werden, wobei das Steuersystem (1) aufweist:
- eine Fahrassistenzvorrichtung (5), die konfiguriert ist, eine Straßenkonfiguration des Kraftfahrzeugs zu analysieren, um zu bestimmen, ob eine Fahrautomatisierungsstufe verfügbar ist, und eine aktive Fahrautomatisierungsstufe zu erkennen, und
- ein Lenkkontrollorgan (7) des Kraftfahrzeugs (V),
- wobei das Lenkkontrollorgan (7) mindestens aufweist:
• einen ersten Bereich (71) versehen mit mindestens einer ersten Leuchtanzeige (11), die konfiguriert ist, eine verfügbare oder aktive Fahrautomatisierungsstufe anzuzeigen,
• einen zweiten Bereich (73) versehen mit mindestens einer zweiten Leuchtanzeige (13), die konfiguriert ist, mindestens eine Anforderung manueller Steuerung anzuzeigen, und
• einen dritten Bereich (75) versehen mit mindestens einer dritten Leuchtanzeige (15), um einen Übergang der Fahrverantwortung zwischen dem automatisierten Steuermodul (3) und dem Fahrer anzuzeigen, und dass
- wobei die Fahrassistenzvorrichtung (5) konfiguriert ist, den Zustand mindestens einer der Leuchtanzeigen (11, 13, 15) zu ändern:
• wenn die Fahrassistenzvorrichtung (5) eine verfügbare Fahrautomatisierungsstufe bestimmt, um die bestimmte verfügbare Fahrautomatisierungsstufe anzuzeigen, und
• wenn die Fahrassistenzvorrichtung (5) eine aktive Fahrautomatisierungsstufe erkennt, um die erkannte aktive Fahrautomatisierungsstufe anzuzeigen, und
• wenn die Fahrassistenzvorrichtung (5) abhängig von der Straßenkonfiguration bestimmt, dass das Kraftfahrzeug (V) vom Fahrer gesteuert werden muss, um mindestens eine Anforderung manueller Steuerung des Kraftfahrzeugs (V) anzuzeigen, und
• wenn die Fahrassistenzvorrichtung (5) eine Umschaltung zwischen einer Fahrautomatisierungsstufe und dem manuellen Betrieb erkennt, um einen Fahrverantwortungsübergang zwischen dem automatisierten Steuermodul (3) und dem Fahrer anzuzeigen.

2. Steuersystem (1) nach dem vorhergehenden Anspruch, wobei das Lenkkontrollorgan (7) ein Lenkrad ist, das aufweist:
- eine Nabe (71) versehen mit der mindestens einen ersten Leuchtanzeige (11),
- einen Umfangsring (73) versehen mit der mindestens einen zweiten Leuchtanzeige (13), und
- mindestens einen Schenkel (75), der die Nabe (71) mit dem Umfangsring (73) verbindet und mit der mindestens einen dritten Leuchtanzeige (15) versehen ist.

3. Steuersystem (1) nach einem der vorhergehenden Ansprüche, wobei mindestens eine der Leuchtanzeigen (11, 13, 15) mindestens eine Lichtquelle aufweist, die konfiguriert ist, verschiedene Lichtfarben zu emittieren, und wobei die Fahrassistenzvorrichtung (5) konfiguriert ist, eine Beleuchtung der mindestens einen Leuchtanzeige (11, 13, 15) gemäß einem vordefinierten Farbencode zu steuern.

4. Steuersystem (1) nach einem der vorhergehenden Ansprüche, wobei mindestens eine der Leuchtanzeigen (11, 13, 15) mindestens eine Lichtquelle mit variabler Stärke aufweist, und wobei die Fahrassistenzvorrichtung (5) konfiguriert ist, die Beleuchtung der mindestens einen Leuchtanzeige (11, 13, 15) mit einer ersten Lichtstärke zu steuern, wenn eine Automatisierungsstufe verfügbar ist, und mit einer zweiten Stärke anders als die erste Stärke zu steuern, wenn eine Automatisierungsstufe aktiv ist.

5. Steuersystem (1) nach einem der vorhergehenden Ansprüche, wobei die Fahrassistenzvorrichtung (5) konfiguriert ist, zu steuern:
- eine Beleuchtung der mindestens einen ersten Leuchtanzeige (11) gemäß einer Lichtanimationssequenz, wenn eine Fahrautomatisierungsstufe verfügbar ist,
- eine Beleuchtung der mindestens einen zweiten Leuchtanzeige (13) gemäß einer anderen Lichtanimationssequenz, wenn die Fahrassistenzvorrichtung (5) bestimmt, dass das Kraftfahrzeug (V) vom Fahrer gesteuert werden muss.

6. Steuersystem (1) nach einem der vorhergehenden Ansprüche, wobei die Fahrassistenzvorrichtung (5) konfiguriert ist, mindestens eine Lichtanimationssequenz mindestens einer der Leuchtanzeigen (11, 13, 15) zu steuern, die den Fahrverantwortungsübergang darstellt.

7. Steuersystem (1) nach dem vorhergehenden Anspruch, wobei die Fahrassistenzvorrichtung (5) konfiguriert ist, zu steuern:
- eine erste Lichtanimationssequenz derart, dass die mindestens eine Leuchtanzeige (11, 13, 15) einen Lichtpfad gemäß einer ersten Richtung bildet, der einem Fahrverantwortungsübergang vom Fahrer zum automatisierten Steuermodul (3) zugeordnet ist, und
- eine zweite Lichtanimationssequenz derart, dass die mindestens eine Leuchtanzeige (11, 13, 15) einen Lichtpfad gemäß einer zweiten Richtung bildet, der einem Fahrverantwortungsübergang vom automatisierten Steuermodul (3) zum Fahrer zugeordnet ist.

8. Steuersystem (1) nach Anspruch 4 in Kombination mit einem der Ansprüche 6 oder 7, wobei die Fahrassistenzvorrichtung (5) konfiguriert ist, eine Lichtanimationssequenz der mindestens einen Leuchtanzeige (11, 13, 15) während des Fahrverantwortungsübergangs mit einer evolutionären Lichtstärke zu steuern, bis eine vordefinierte Lichtstärke erreicht ist, wenn der Fahrverantwortungsübergang beendet ist.

9. Kraftfahrzeug (V), das konfiguriert ist, gemäß einem manuellen Betrieb von einem Fahrer ohne automatisierte Assistenz oder gemäß verschiedenen Fahrautomatisierungsstufen gesteuert zu werden, **dadurch gekennzeichnet, dass** es ein Steuersystem (1) nach einem der vorhergehenden Ansprüche aufweist.

## Claims

1. Control system (1) for controlling a motor vehicle (V) configured to be driven in a manual mode by a driver without automated assistance or in different levels of driving automation by means of an automated management module (3) of the control system, the control system (1) having:
- a driving assistance device (5) configured to analyze a road configuration of the motor vehicle so as to determine if a level of driving automation is available and to detect an active level of driving automation, and
- a steering control member (7) for controlling the steering of the motor vehicle (V),
- the steering control member (7) having at least:
• one first region (71) provided with at least one first indicator light (11) configured to indicate an available or active level of driving automation,
• one second region (73) provided with at least one second indicator light (13) configured to indicate at least one request for manual driving, and
• one third region (75) provided with at least one third indicator light (15) for indicating a changeover in responsibility for driving between the automated management module (3) and the driver, and in that
- the driving assistance device (5) being configured to modify the state of at least one of the indicator lights (11, 13, 15):
• when the driving assistance device (5) determines an available level of driving automation, so as to indicate the available level of driving automation that was determined, and
• when the driving assistance device (5) detects an active level of driving automation, so as to indicate the active level of driving automation that was detected, and
• when the driving assistance device (5) determines, depending on the road configuration, that the motor vehicle (V) must be driven by the driver, so as to indicate at least one request for manual driving of the motor vehicle (V), and
• when the driving assistance device (5) detects a switchover between a level of driving automation and the manual mode, so as to indicate a changeover in responsibility for driving between the automated management module (3) and the driver.

2. Control system (1) according to the preceding claim, wherein the steering control member (7) is a steering wheel having:
- a hub (71) provided with said at least one first indicator light (11),
- a peripheral ring (73) provided with said at least one second indicator light (13), and
- at least one arm (75) which connects the hub (71) to the peripheral ring (73) and is provided with said at least one third indicator light (15).

3. Control system (1) according to one of the preceding claims, wherein at least one of the indicator lights (11, 13, 15) has at least one light source configured to emit different colors of light, and wherein the driving assistance device (5) is configured to manage the illumination of said at least one indicator light (11, 13, 15) in a predefined color code.

4. Control system (1) according to one of the preceding claims, wherein at least one of the indicator lights (11, 13, 15) has at least one light source of variable intensity, and wherein the driving assistance device (5) is configured to manage the illumination of said at least one indicator light (11, 13, 15) with a first light intensity when a level of automation is available and with a second intensity, different than the first intensity, when a level of automation is active.

5. Control system (1) according to any one of the preceding claims, wherein the driving assistance device (5) is configured to manage:
- the illumination of said at least one first indicator light (11) in a lighting display sequence when a level of driving automation is available,
- the illumination of said at least one second indicator light (13) in another lighting display sequence when the driving assistance device (5) determines that the motor vehicle (V) must be driven by the driver.

6. Control system (1) according to one of the preceding claims, wherein the driving assistance device (5) is configured to manage at least one lighting display sequence of at least one of the indicator lights (11, 13, 15) representing the changeover in responsibility for driving.

7. Control system (1) according to the preceding claim, wherein the driving assistance device (5) is configured to manage:
- a first lighting display sequence such that said at least one indicator light (11, 13, 15) forms a light path in a first direction, associated with a changeover in responsibility for driving from the driver to the automated management module (3), and
- a second lighting display sequence such that said at least one indicator light (11, 13, 15) forms a light path in a second direction, associated with a changeover in responsibility for driving from the automated management module (3) to the driver.

8. Control system (1) according to Claim 4 in combination with either of Claims 6 and 7, wherein the driving assistance device (5) is configured to manage a lighting display sequence of said at least one indicator light (11, 13, 15) with a light intensity that changes during the changeover in responsibility for driving until it reaches a predefined light intensity when the changeover in responsibility for driving is complete.

9. Motor vehicle (V) configured to be driven in a manual mode by a driver without automated assistance or in different levels of driving automation, **characterized in that** it has a control system (1) according to one of the preceding claims.
